(19) Europäisches Patentamt
European Patent Office
Office européen des brevets

(11) **EP 3 529 673 B1**

(12) **EUROPÄISCHE PATENTSCHRIFT**

(45) Veröffentlichungstag und Bekanntmachung des Hinweises auf die Patenterteilung:
**09.09.2020  Patentblatt 2020/37**

(21) Anmeldenummer: **17794404.8**

(22) Anmeldetag: **19.10.2017**

(51) Int Cl.:
*G05B 19/042* (2006.01)    *G05B 19/05* (2006.01)
*G06F 11/07* (2006.01)    *G05B 23/02* (2006.01)

(86) Internationale Anmeldenummer:
**PCT/IB2017/001267**

(87) Internationale Veröffentlichungsnummer:
**WO 2018/100422 (07.06.2018 Gazette 2018/23)**

(54) **STEUERUNG REDUNDANTER VERARBEITUNGSEINHEITEN**

CONTROL OF REDUNDANT PROCESSING UNITS

COMMANDE D'UNITÉS DE TRAITEMENT REDONDANTES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.12.2016  DE 202016007417 U**

(43) Veröffentlichungstag der Anmeldung:
**28.08.2019  Patentblatt 2019/35**

(73) Patentinhaber: **WAGO Verwaltungsgesellschaft mbH**
**32423 Minden (DE)**

(72) Erfinder: **WEIDNER, Markus**
**32429 Minden (DE)**

(74) Vertreter: **Müller, Wolf-Christian**
**WAGO Kontakttechnik GmbH & Co. KG**
**Patentabteilung**
**Hansastraße 27**
**32423 Minden (DE)**

(56) Entgegenhaltungen:
**EP-A1- 3 048 499    EP-A2- 0 316 087**

EP 3 529 673 B1

**Beschreibung**

GEBIET

Die vorliegende Erfindung bezieht sich auf redundante Verarbeitungseinheiten. Insbesondere bezieht sich die vorliegende Erfindung auf parallel-redundante Verarbeitungseinheiten, die durch einen Betriebsartenwahlschalter aktiviert und deaktiviert werden können.

HINTERGRUND

In sicherheitsgerichteten Automatisierungsanlagen werden zur Steuerung oftmals parallel-redundante Verarbeitungseinheiten (bspw. parallel-redundante Mikrocontroller) eingesetzt (im Folgenden auch als "Safety-Controller" bezeichnet). Die parallel-redundanten Mikrocontroller führen bspw. zeitparallel ein Laufzeitsystem aus, das eine IEC-Applikation interpretiert und dabei Prozessdaten verarbeitet. Die Verarbeitungszyklen, bestehend aus dem Einlesen der Eingangsinformationen, deren Verarbeitung sowie der Ergebnisausgabe, werden typischerweise durch ein gemeinsames Signal angestoßen und zyklisch synchron begonnen. Das Synchronisationssignal kann extern bereitgestellt oder von einem der Safety-Controller selbst generiert werden. Am Ende, vor der Ausgabe der Ergebnisse, findet zwischen den Safety-Controllern normalerweise ein Kreuzvergleich statt, um Verarbeitungsfehler zu detektieren.

Der Betrieb der parallel-redundanten Mikrocontroller wird in der Regel durch einen Betriebsartenwahlschalter gesteuert, mit dem die Ausführung des IEC-Programms gestartet und angehalten werden kann (RUN / STOP). Der Zustand des Betriebsartenwahlschalters wird dazu bspw. vor einem Bearbeitungszyklus eingelesen und entscheidet darüber, ob die beiden Safety-Controller die IEC-Applikation ausführen. Dabei ist wichtig, dass die Entscheidung, ob in einem Zyklus der Interpreter ausgeführt werden soll oder nicht, stets von beiden Safety-Controllern identisch entschieden wird. Denn nur dann können die im abschließenden Kreuzvergleich zu prüfenden Ergebnisse identisch sein. Der logische Schalterzustand des Betriebsartenwahlschalters muss deshalb von beiden Safety-Controllern eingelesen werden können und auf beiden Safety-Controllern stets zu demselben Ergebnis führen.

Aus der EP 0 316 087 A2 ist ein Verfahren und eine Vorrichtung zum Synchronisieren mehrerer Prozessoren bekannt. Jeder Prozessor arbeitet gemäß seinem eigenen unabhängigen Takt, zeigt das Auftreten eines vorgeschriebenen Prozesses oder Ereignisses auf einer Leitung an und empfängt. Signale auf einer anderen Leitung, um einen Prozessorwartezustand auszulösen. Jeder Prozessor hat einen Zähler, der die Anzahl der Prozessorereignisse zählt, die seit der letzten Synchronisation der Prozessoren angezeigt wurden. Wenn ein Ereignis, das eine Synchronisation erfordert, von einer dem Prozessor zugeordneten Synchronisationslogikschaltung erkannt wird, erzeugt die Synchronisationslogikschaltung das Wartesignal nach dem nächsten Prozessorereignis. Eine jedem Prozessor zugeordnete Vergleichsschaltung testet dann die anderen Ereigniszähler in dem System und bestimmt, ob ihr zugeordneter Prozessor hinter den anderen ist. Wenn ja, entfernt die Synchronisationslogikschaltung das Wartesignal bis zum nächsten Prozessorereignis. Der Prozessor wird schließlich gestoppt, wenn sein Ereigniszähler mit dem Ereigniszähler des schnellsten Prozessors übereinstimmt. Zu diesem Zeitpunkt sind alle Prozessoren synchronisiert und können zur Bearbeitung des Ereignisses neu gestartet werden.

Aus der EP 3 048 499 A1 ist ein Automatisierungssteuerverfahren, -system und -gerät bekannt, das einen redundanten Watchdog enthält, der eine Sicherheitssteuerung verwendet. Die Steuerung umfasst eine erste Verarbeitungseinheit, eine zweite Verarbeitungseinheit und eine integrierte Schaltung, die konfiguriert ist, Fehleranzeigesignale von der ersten und der zweiten Verarbeitungseinheit zu empfangen und für einen von der ersten oder zweiten. Verarbeitungseinheit erkannten Fehlerzustand die E/A-Kommunikationen zu deaktivieren.

ZUSAMMENFASSUNG

Es ist die Aufgabe der vorliegenden Erfindung, die aus dem Stand der Technik bekannten Konzepte zum Betrieb parallel-redundanter Verarbeitungseinheiten zu verbessern.

Diese Aufgabe wird durch eine erfindungsgemäße Schaltung gelöst. Die Schaltung umfasst eine erste Taktquelle, eine zweite Taktquelle und eine dritte Taktquelle, eine mit der ersten Taktquelle verbundene erste Verarbeitungseinheit, aufweisend eine erste Logikschaltung und eine mit der ersten Logikschaltung verbundene erste Speicherschaltung, wobei in der ersten Speicherschaltung ein erster Satz an Anweisungen gespeichert ist, der dazu eingerichtet ist, bei Ausführung durch die erste Logikschaltung ein erstes Steuerprogramm zu implementieren, wobei die erste Taktquelle einen Takt der Ausführung des ersten Satzes an Anweisungen vorgibt, eine mit der zweiten Taktquelle verbundene zweite Verarbeitungseinheit, aufweisend eine zweite Logikschaltung und eine mit der zweiten Logikschaltung verbundene zweite Speicherschaltung, wobei in der zweiten Speicherschaltung ein zweiter Satz an Anweisungen gespeichert ist, der dazu eingerichtet ist, bei Ausführung durch die zweite Logikschaltung ein zweites Steuerprogramm zu implementieren, wobei die zweite Taktquelle einen Takt der Ausführung des zweiten Satzes an Anweisungen vorgibt und der zweite Satz an Anweisungen eine funktional identische Kopie des ersten Satzes an Anweisungen ist, und eine Eingabeeinheit, wobei die erste Verarbeitungseinheit dazu eingerichtet ist, in Reaktion auf ein Signal der dritten Taktquelle einen Eingabezustand der Eingabeeinheit abzufragen und den abgefragten Eingabezustand an einem Ausgang der ersten Verarbeitungseinheit auszugeben, wobei ein zweiter Eingang der zweiten Verarbeitungseinheit an dem Ausgang der ersten Verarbeitungseinheit angeschlossen ist und die erste Verarbeitungseinheit und die zweite Verarbeitungseinheit dazu eingerichtet sind, den ausgegebenen Eingabezustand nach einer vorbestimmten nominellen Zeitdauer nach dem Signal der dritten Taktquelle zu bestimmen und, wenn dem bestimmten Eingabezustand ein Ausführen der Anweisungen zugeordnet ist, die Anweisungen auszuführen, und wobei die Schaltung ferner dazu eingerichtet ist, ein von der ersten Verarbeitungseinheit durch Ausführen des ersten Satzes an Anweisungen erzeugtes erstes Steuersignal mit einem von der zweiten Verarbeitungseinheit durch Ausführen des zweiten Satzes an Anweisungen erzeugten zweiten Steuersignal zu vergleichen, und bei Abweichungen zwischen dem ersten Steuersignal und dem zweiten Steuersignal ein Fehlersignal zu erzeugen.

Dabei ist unter dem Begriff "Taktquelle", wie er in der Beschreibung und den Ansprüchen verwendet wird, insbesondere ein Bauteil zu verstehen, welches ein (binäres) frequenzstabiles Taktsignal erzeugt. Ferner ist unter dem Begriff "Verarbeitungseinheit", wie er in der Beschreibung und den Ansprüchen verwendet wird, insbesondere eine Einheit zu verstehen, die Eingangssignale gemäß einer oder mehrerer Anweisungen in Ausgangssignale umwandelt. Des Weiteren ist unter dem Begriff "Logikschaltung", wie er in der Beschreibung und den Ansprüchen verwendet wird, insbesondere eine Schaltung, d. h. eine Verkettung elektronischer Bauteile zu verstehen, die Signalpegel vergleichende Bauteile umfasst.

Zudem ist unter dem Begriff "Speicherschaltung", wie er in der Beschreibung und den Ansprüchen verwendet wird, insbesondere eine Schaltung zu verstehen, die Bauteile umfasst, die aktiv in unterschiedliche Zustände gebracht werden können, wobei die Zustände während einer definierten Zeitdauer oder im Wesentlichen unbegrenzt stabil bleiben. Ferner ist unter dem Begriff "Steuerprogramm", wie er in der Beschreibung und den Ansprüchen verwendet wird, insbesondere eine Abfolge an Anweisungen zu verstehen, die aufeinander aufbauend Eingangssignale in Ausgangssignale umwandeln. Des Weiteren ist unter dem Begriff "Fehlersignal", wie er in der Beschreibung und den Ansprüchen verwendet wird, ein Signal zu verstehen, welches als ein Signal zur Anzeige eines Fehlers interpretierbar ist bzw. interpretiert wird.

Vorzugsweise ist ein erster Eingang der ersten Verarbeitungseinheit an den Ausgang der ersten Verarbeitungseinheit angeschlossen.

Vorzugsweise ist das Bestimmen des ausgegebenen Eingabezustand durch die erste Verarbeitungseinheit durch die erste Taktquelle und das Bestimmen des ausgegebenen Eingabezustand durch die zweite Verarbeitungseinheit durch die zweite Taktquelle getaktet. Der Begriff "getaktet" bedeutet in diesem Zusammenhang insbesondere, dass im Zusammenhang mit dem Bestimmen getätigte Prozessschritte in einem von der jeweiligen Taktquelle vorgegebenen (Arbeits-) Takt ausgeführt werden.

Vorzugsweise weisen die erste Taktquelle und die zweite Taktquelle eine identische nominelle Frequenz auf und die nominelle Zeitdauer ist, unter Berücksichtigung einer maximalen Frequenzabweichung der ersten Taktquelle von der nominellen Frequenz und unter Berücksichtigung einer maximalen Frequenzabweichung der zweiten Taktquelle von der nominellen Frequenz, so gewählt, dass eine minimale reale Zeitdauer zwischen der Ausgabe des Eingabezustands durch die erste Verarbeitungseinheit und dem Bestimmen des Eingabezustands durch die Verarbeitungseinheiten größer als null ist.

Dabei ist unter dem Begriff "nominelle Zeitdauer", wie er in der Beschreibung und den Ansprüchen verwendet wird, insbesondere eine durch eine Anzahl an Takten einer Taktquelle multipliziert mit einer Soll-Taktzeit der Taktquelle bestimmte Zeitdauer zu verstehen. Hingegen ist unter dem Begriff "reale Zeitdauer", wie er in der Beschreibung und den Ansprüchen verwendet wird, insbesondere eine tatsächliche Zeitdauer zu verstehen, die während der Anzahl an Takten vergeht. Nominelle Zeitdauer und reale Zeitdauer stimmen somit überein, wenn die Taktquelle die Soll-Taktzeit exakt einhält. Je stärker hingegen eine tatsächliche Frequenz von der nominellen Frequenz der Taktquelle abweicht, desto größer ist der Unterschied zwischen nomineller und realer Zeitdauer. Nominelle und reale Zeitdauer spiegeln somit eine aus einer Abweichung der tatsächlichen Frequenz von der nominellen Frequenz resultierende Abweichung einer realen Ausführungszeit von einer gewünschten oder erwarteten Ausführungszeit wider.

Vorzugsweise ist die zweite Verarbeitungseinheit dazu eingerichtet, in Reaktion auf ein Signal der dritten Taktquelle einen Eingabezustand abzufragen und den abgefragten Eingabezustand an einem Ausgang der zweiten Verarbeitungseinheit auszugeben.

Vorzugsweise sind die erste Logikschaltung der ersten Verarbeitungseinheit und die zweite Logikschaltung der zweiten Verarbeitungseinheit funktional identisch ausgebildet. Als "funktional identisch" sollen dabei insbesondere Schaltungen gelten, die bei identischer Eingangsbeschaltung identische Ausgangssignale erzeugen.

Vorzugsweise ist die erste Verarbeitungseinheit in ein erstes Gehäuse integriert und die zweite Verarbeitungseinheit in ein zweites Gehäuse integriert und die Schaltung weist ein drittes Gehäuse auf, wobei das erste Gehäuse und das zweite Gehäuse in das dritte Gehäuse integriert sind. Unter dem Begriff "Gehäuse" ist dabei insbesondere ein Isolierstoffelement zu verstehen, das wesentliche oder alle Elemente der jeweiligen Verarbeitungseinheit bzw. der Verarbeitungseinheiten umschließt.

Vorzugsweise ist die erste Taktquelle in das erste Gehäuse, die zweite Taktquelle in das zweite Gehäuse und die dritte Taktquelle in das dritte Gehäuse integriert.

Vorzugsweise ist die erste Verarbeitungseinheit dazu eingerichtet, in Reaktion auf das Signal der dritten Taktquelle durch Ausführen des ersten Satzes an Anweisungen den Eingabezustand der Eingabeeinheit zu bestimmen.

Vorzugsweise ist die Schaltung dazu eingerichtet, in jeder Periode der dritten Taktquelle das erste Steuerprogramm und das zweite Steuerprogramm korreliert auszuführen. Unter dem Begriff "korreliert" ist dabei insbesondere eine zeitliche Korrelation zu verstehen, gemäß der das erste Steuerprogramm und das zweite Steuerprogramm zwar nicht absolut synchron aber bspw. mit einer sich in vorbestimmten Grenzen befindlichen Verzögerung zueinander ausgeführt werden.

KURZBESCHREIBUNG DER ZEICHNUNGEN

Die Erfindung wird nachfolgend in der detaillierten Beschreibung anhand von Ausführungsbeispielen erläutert, wobei auf Zeichnungen Bezug genommen wird, in denen:

> Fig. 1 eine schematische Darstellung einer erfindungsgemäßen Schaltung gemäß einer beispielhaften Ausführungsform;

> Fig. 2 ein Flussdiagramm eines durch die Schaltung implementierten Prozesses; und

> Fig. 3 einen beispielhaften zeitlichen Ablauf eines durch die Schaltung implementierten Prozesses zeigt.

Dabei sind in den Zeichnungen gleiche Elemente durch gleiche Bezugszeichen gekennzeichnet.

DETAILLIERTE BESCHREIBUNG

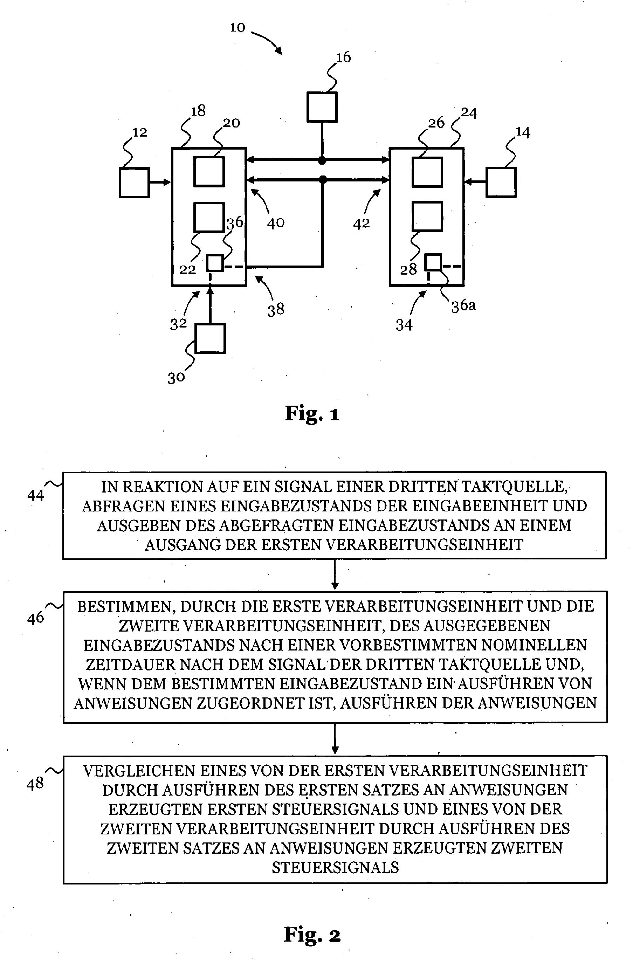

Fig. 1 zeigt eine schematische Darstellung einer erfindungsgemäßen Schaltung 10 gemäß einer beispielhaften Ausführungsform. Die Schaltung 10 umfasst eine erste Taktquelle 12, eine zweite Taktquelle 14 und eine dritte Taktquelle 16, die jeweils ein Taktsignal bereitstellen, wobei die erste Taktquelle 12 und die zweite Taktquelle 14 eine gleiche und insbesondere eine höhere Taktfrequenz als die dritte Taktquelle 16 aufweisen können. Die erste Taktquelle 12 ist mit einer ersten Verarbeitungseinheit 18 verbunden bzw. versorgt die erste Verarbeitungseinheit 18 mit einem Taktsignal.

Die erste Verarbeitungseinheit 18 weist eine erste Logikschaltung 20 und eine mit der ersten Logikschaltung 20 verbundene erste Speicherschaltung 22 auf. Die erste Speicherschaltung 22 speichert einen ersten Satz an Anweisungen. Der erste Satz an Anweisungen ist auf ein erstes Steuerprogramm gerichtet, welches durch Abarbeiten der Anweisungen (durch die erste Logikschaltung 20) zyklisch ausgeführt wird. Das erste Steuerprogramm liest bspw. innerhalb eines Zyklus Eingangsdaten bzw. Eirigangssignale ein und bestimmt auf Basis der Eingangsdaten bzw. auf Basis der Eingangssignale Ausgangsdaten bzw. Ausgangssignale. Die Geschwindigkeit der Abarbeitung der Anweisungen und damit die Dauer eines Abarbeitungszyklus wird dabei durch die Frequenz des Taktsignals der ersten Taktquelle 12 bestimmt, das den Arbeitstakt der ersten Logikschaltung 20 vorgibt.

Die zweite Taktquelle 14 ist mit einer zweiten Verarbeitungseinheit 24 verbunden bzw. versorgt die zweite Verarbeitungseinheit 24 mit einem Taktsignal. Die zweite Verarbeitungseinheit 24 weist eine zweite Logikschaltung 26 und eine mit der zweiten Logikschaltung 26 verbundene zweite Speicherschaltung 28 auf, die einen zweiten Satz an Anweisungen speichert. Der zweite Satz an Anweisungen ist auf ein zweites, zum ersten Steuerprogramm (funktional) identisches Steuerprogramm gerichtet, welches durch Abarbeiten der Anweisungen (durch die zweite Logikschaltung 26) zyklisch ausgeführt wird. Das zweite Steuerprogramm liest bspw. innerhalb eines Zyklus die Eingangsdaten bzw. Eingangssignale ein und bestimmt auf Basis der Eingangsdaten bzw. auf Basis der Eingangssignale Ausgangsdaten bzw. Ausgangssignale.

Die Geschwindigkeit mit der der zweite Satz an Anweisungen durch die zweite Logikschaltung 26 abgearbeitet wird, wird dabei durch die Frequenz des Taktsignals der zweiten Taktquelle 14 bestimmt, das den Arbeitstakt der zweiten Logikschaltung 26 vorgibt. Die Geschwindigkeit, mit der der jeweilige Satz an Anweisungen durch die erste Logikschaltung 20 bzw. die zweite Logikschaltung 26 abgearbeitet wird, kann somit, je nach Frequenz des Taktsignals der ersten Taktquelle 12 und der zweiten Taktquelle 14, voneinander abweichen. Da der erste Satz an Anweisungen und der zweite Satz an Anweisungen (funktional) identische Anweisungen umfassen, werden bei einem fehlerfreien Betrieb durch die erste Verarbeitungseinheit 18 und die zweite Verarbeitungseinheit 24 auf Basis gleicher Eingangsdaten bzw. auf Basis gleicher Eingangssignale gleiche Ausgangsdaten bzw. Ausgangssignale erzeugt.

Zur Überprüfung des fehlerfreien Betriebs können die Ausgangsdaten bzw. Ausgangssignale der ersten Verarbeitungseinheit 18 und der zweiten Verarbeitungseinheit 24 einem Kreuzvergleich unterzogen werden. Der Kreuzvergleich kann bspw. dadurch erfolgen, dass die erste Verarbeitungseinheit 18 und die zweite Verarbeitungseinheit 24 mittels einer oder mehrerer Datenleitungen (nicht gezeigt) verbunden sind und die erste Verarbeitungseinheit 18 und die zweite Verarbeitungseinheit 24 die Ausgangsdaten bzw. Ausgangssignale der jeweiligen anderen Verarbeitungseinheit mittels der einen oder der mehreren Datenleitungen einlesen kann. Wird bei dem Kreuzvergleich eine (wesentliche) Abweichung festgestellt, kann ein Fehlersignal erzeugt werden, das bspw. an eine Überwachungseinheit übertragen werden kann. Die Überwachungseinheit kann in Reaktion auf das Fehlersignal bspw. die erste Verarbeitungseinheit 18 und die zweite Verarbeitungseinheit 24 zurücksetzen und/oder einen durch die erste Verarbeitungseinheit 18 und die zweite Verarbeitungseinheit 24 gesteuerten Prozess anhalten. Nach erfolgreichem Kreuzvergleich, d. h. bei fehlerfreiem Betrieb, können die Ausgangsdaten bzw. die Ausgangssignale durch die erste Verarbeitungseinheit 18 und/oder die zweite Verarbeitungseinheit 24 bereitgestellt und zur Prozesssteuerung verwendet werden.

Die Schaltung 10 umfasst ferner eine Eingabeeinheit 30 in Form eines Betriebsartenwahlschalters, über die eingegeben bzw. gewählt werden kann, ob die erste Verarbeitungseinheit 18 den ersten Satz an Anweisungen und die zweite Verarbeitungseinheit 24 den zweiten Satz an Anweisungen in einem von der dritten Taktquelle 16 vorgegebenen Zyklus abarbeiten oder nicht abarbeiten sollen. D. h., die Eingabeeinheit 30 ermöglicht ein Aktivieren und Stoppen der zyklischen Verarbeitung von Eingangsdaten durch die erste Verarbeitungseinheit 18 und durch die zweite Verarbeitungseinheit 24. Während, das Taktsignal der ersten Taktquelle 12 nur der ersten Verarbeitungseinheit 18 und das Taktsignal der zweiten Taktquelle 14 nur der zweiten Verarbeitungseinheit 24 zur Verfügung steht, ermöglicht das Taktsignal der dritten Taktquelle somit eine Synchronisation der durch die erste Verarbeitungseinheit 18 bzw. die zweite Verarbeitungseinheit 24 ausgeführten Verarbeitungszyklen.

Diesbezüglich ist die erste Verarbeitungseinheit 18 dazu eingerichtet, in Reaktion auf ein (Takt-) Signal der dritten Taktquelle 16 ein an einem ersten Eingang 32 der ersten Verarbeitungseinheit 18 anliegendes Signal der Eingabeeinheit 30 einzulesen. Ist die zweite Verarbeitungseinheit 24, wie in Fig. 1 gezeigt, funktional identisch zur ersten Verarbeitungseinheit 18 ausgebildet, ist die zweite Verarbeitungseinheit 24 ebenfalls dazu eingerichtet, in Reaktion auf ein Signal der dritten Taktquelle 16 ein an einem ersten Eingang 34 der zweiten Verarbeitungseinheit 24 anliegendes Signal einzulesen. Während jedoch der erste Eingang 34 der zweiten Verarbeitungseinheit 24 nicht beschaltet ist und somit kein bestimmtes Signal anliegt, ist der erste Eingang 32 der ersten Verarbeitungseinheit 18 mit der Eingabeeinheit 30 verbunden.

Das durch die Eingabeeinheit 30 bereitgestellte Signal wird somit, wie in Fig. 1 gezeigt, von einer Abtast- und Halteschaltung 36 der ersten Verarbeitungseinheit 18 abgetastet und an einem Ausgang 38 der ersten Verarbeitungseinheit 18 ausgegeben. An den Ausgang 38 der ersten Verarbeitungseinheit 18 ist ein elektrischer Leiter angeschlossen, der das ausgegebene Signal an einen zweiten Eingang 40 der ersten Verarbeitungseinheit 18 und an einen zweiten Eingang 42 der zweiten Verarbeitungseinheit 24 überträgt. Die erste Verarbeitungseinheit 18 und die zweite Verarbeitungseinheit 24 sind ferner dazu eingerichtet, den ausgegebenen Eingabezustand nach einer vorbestimmten nominellen Zeitdauer nach dem Signal der dritten Taktquelle 16 zu bestimmen und, wenn dem bestimmten Eingabezustand ein Ausführen der Anweisungen zugeordnet ist, die Anweisungen auszuführen.

Der durch die Schaltung 10 implementierte Prozess umfasst somit, wie in den Schritten 44 bis 48 in Fig. 2 gezeigt, das Abfragen des Eingabezustands der Eingabeeinheit 30 und das Ausgeben des abgefragten Eingabezustands an dem Ausgang 38 der ersten Verarbeitungseinheit 18, das Einlesen des ausgegebenen Eingabezustandes nach einer vorbestimmten nominellen Signaldauer durch die erste Verarbeitungseinheit 18 und die zweite Verarbeitungseinheit 24, das Ausführen der Anweisungen, wenn der eingelesene Eingabezustand dies vorgibt sowie das Vergleichen der gemäß der Anweisungen durch die erste Verarbeitungseinheit 18 und die zweite Verarbeitungseinheit 24 erzeugten Steuersignale.

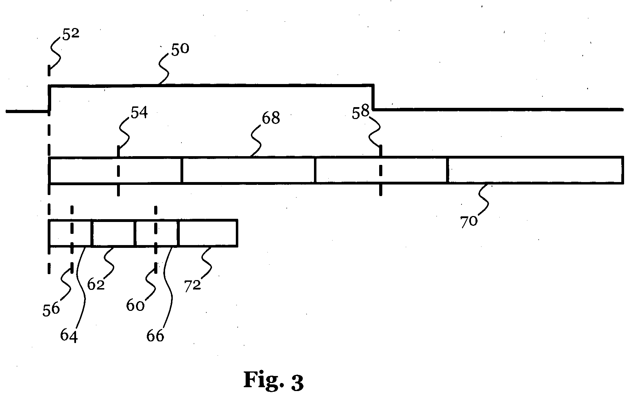

Fig. 3 illustriert die Ermittlung der nominellen Zeitdauer (nach dem Signal der dritten Taktquelle 16), nach der der ausgegebene Eingabezustand durch die erste Verarbeitungseinheit 18 und die zweite Verarbeitungseinheit 24 bestimmt wird. Die in Fig. 3 dargestellte Illustration zeigt das von der dritten Taktquelle 16 bereitgestellte Taktsignal 50. In Reaktion auf das Taktsignal 50 bzw. eine Flanke des Taktsignals 50 zu einem ersten Zeitpunkt 52, beginnen die erste Verarbeitungseinheit 18 und die zweite Verarbeitungseinheit 24 mit einer Routine zum Abfragen, Ausgeben und Bestimmen des Eingabezustands. Obwohl die zweite Verarbeitungseinheit 24, wie in Fig. 1 gezeigt, nicht beschaltet ist, zeigt Fig. 1 das Abfragen des Eingabezustands durch die erste Verarbeitungseinheit 18 zu einem zweiten Zeitpunkt 54 und das Abfragen eines Eingabezustands durch die zweite Verarbeitungseinheit 24 zu einem dritten Zeitpunkt 56. Nach dem Abfragen wird der Eingabezustand mittels der in Fig. 1 gezeigten Abtast- und Halteschaltungen 36 und 36a ab dem zweiten Zeitpunkt 54 bzw. dem dritten Zeitpunkt 56 ausgegeben.

Der ausgegebene Eingabezustand wird zu dem vierten Zeitpunkt 58 und zu dem fünften Zeitpunkt 60 durch die erste Verarbeitungseinheit 18 bzw. durch die zweite Verarbeitungseinheit 24 bestimmt. Obwohl die reale Verarbeitungsgeschwindigkeit der zweiten Verarbeitungseinheit 24, wie aus Fig. 3 ersichtlich, größer sein kann, als die der ersten Verarbeitungseinheit 18, verhindert ein zweites Zeitintervall 62 zwischen einem ersten Zeitintervall 64, in dem das Ausgeben durch die zweite Verarbeitungseinheit 24 stattfindet, und einem dritten Zeitintervall 66, in dem das Bestimmen durch zweite Verarbeitungseinheit 24 stattfindet, dass der fünfte Zeitpunkt 60 vor dem zweiten Zeitpunkt 54 liegt. Da das Abfragen, Ausgeben und Bestimmen des Eingabezustands durch die erste Verarbeitungseinheit 18 und durch die zweite Verarbeitungseinheit 24 nominell synchron abläuft, ist, wie in Fig. 3 gezeigt, ebenso ein viertes Zeitintervall 68 zwischen das Ausgeben und Bestimmen durch die erste Verarbeitungseinheit 18 eingefügt, welches aber in dem in Fig. 1 gezeigten Fall prinzipiell auch wegfallen könnte.

Die nominelle Länge des zweiten Zeitintervalls 62 basiert dabei auf einem Geschwindigkeitsfaktor, der das Verhältnis zwischen den nominellen Frequenzen und den minimal und maximal zu erwartenden Frequenzen der beiden Taktquellen 12 und 14 untereinander angibt. Die nominelle Länge des zweiten Zeitintervalls 62 ist so gewählt, dass bei einer minimal zu erwartenden tatsächlichen Frequenz der ersten Taktquelle 12 und einer maximal zu erwartenden tatsächlichen Frequenz der zweiten Taktquelle 14 ein reales Zeitintervall zwischen dem Ausgeben durch die erste Verarbeitungseinheit 18 und dem Bestimmen durch die zweite Verarbeitungseinheit 24 größer als null ist. Geht man bspw. davon aus, dass die tatsächliche Frequenz der ersten Taktquelle 12 und die tatsächliche Frequenz der zweiten Taktquelle 14 in einem Intervall $[f_{min}; f_{max}]$ um die gemeinsame nominelle Frequenz $f_{nom}$ liegen, muss die nominelle Zeitdauer, $l_{nom}$, zwischen dem ersten Zeitpunkt 52 und dem Bestimmen zum fünften Zeitpunkt 60 unter Berücksichtigung eines nominellen Zeitintervalls $K_{nom}$ zwischen dem ersten Zeitpunkt 52 und dem Ausgeben zum zweiten Zeitpunkt 54 größer sein als

$$K_{nom} \frac{f_{max}}{f_{min}}$$

um sicherzustellen, dass die erste Verarbeitungseinheit 18 oder die zweite Verarbeitungseinheit 24 den aktuellen Eingabezustand erst bestimmen, nachdem dieser durch eine entsprechende Verarbeitungseinheit ausgegeben wurde. Ansonsten könnte es dazu kommen, dass die erste Verarbeitungseinheit 18 und die zweite Verarbeitungseinheit 24 unterschiedliche Eingabezustände bestimmen.

Nach dem Bestimmen des Eingabezustands können die erste Verarbeitungseinheit 18 und die zweite Verarbeitungseinheit 24 in den sich an das Bestimmen anschließenden Zeitintervallen 70 bzw. 72 die Anweisungen ausführen, wenn der eingelesene Eingabezustand dies vorgibt. Der Takt der dritten Taktquelle 16 kann dabei so gewählt sein, dass eine Oszillation des Taktsignals länger dauert als das Abfragen, Ausgeben und Bestimmen des Eingabezustands, das Abarbeiten der Anweisungen und das Vergleichen und Bereitstellen oder Ausgeben der Ausgangsdaten bzw. der Ausgangssignale.

BEZUGSZEICHENLISTE

| 10 | Schaltung |
| 12 | Taktquelle |
| 14 | Taktquelle |
| 16 | Taktquelle |
| 18 | Verarbeitungseinheit |
| 20 | Logikschaltung |
| 22 | Speicherschaltung |
| 24 | Verarbeitungseinheit |
| 26 | Logikschaltung |
| 28 | Speicherschaltung |
| 30 | Eingabeeinheit |
| 32 | Eingang |
| 34 | Eingang |
| 36, 36a | Abtast- und Halteschaltung |
| 38 | Ausgang |
| 40 | Eingang |
| 42 | Eingang |
| 44 | Prozessschritt |
| 46 | Prozessschritt |
| 48 | Prozessschritt |
| 50 | Taktsignal |
| 52 | Zeitpunkt |
| 54 | Zeitpunkt |
| 56 | Zeitpunkt |
| 58 | Zeitpunkt |
| 60 | Zeitpunkt |
| 62 | Zeitintervall |
| 64 | Zeitintervall |
| 66 | Zeitintervall |
| 68 | Zeitintervall |
| 70 | Zeitintervall |
| 72 | Zeitintervall |

**Patentansprüche**

1. Schaltung (10), umfassend:

   eine erste Taktquelle (12), eine zweite Taktquelle (14) und eine dritte Taktquelle (16), eine mit der ersten Taktquelle (12) verbundene erste Verarbeitungseinheit (18), aufweisend eine erste Logikschaltung (20) und eine mit der ersten Logikschaltung (20) verbundene erste Speicherschaltung (22), wobei in der ersten Speicherschaltung (22) ein erster Satz an Anweisungen gespeichert ist, der dazu eingerichtet ist, bei Ausführung durch die erste Logikschaltung (20) ein erstes Steuerprogramm zu implementieren, wobei die erste Taktquelle (12) dazu eingerichtet ist einen Takt der Ausführung des ersten Satzes an Anweisungen vorzugeben, eine mit der zweiten Taktquelle (14) verbundene zweite Verarbeitungseinheit (24), aufweisend eine zweite Logikschaltung (26) und eine mit der zweiten Logikschaltung (26) verbundene zweite Speicherschaltung (28), wobei in der zweiten Speicherschaltung (28) ein zweiter Satz an Anweisungen gespeichert ist, der dazu eingerichtet ist, bei Ausführung durch die zweite Logikschaltung (26) ein zweites Steuerprogramm zu implementieren, wobei die zweite Taktquelle (14) dazu eingerichtet ist einen Takt der Ausführung des zweiten Satzes an Anweisungen vorzugeben und der zweite Satz an Anweisungen eine funktional identische Kopie des ersten Satzes an Anweisungen ist, und

eine Eingabeeinheit (30), wobei die erste Verarbeitungseinheit (18) dazu eingerichtet ist, in Reaktion auf ein Signal der dritten Taktquelle (16) einen Eingabezustand der Eingabeeinheit (30) abzufragen und den abgefragten Eingabezustand an einem Ausgang (38) der ersten Verarbeitungseinheit (18) auszugeben,

wobei die Schaltung (10) ferner dazu eingerichtet ist, ein von der ersten Verarbeitungseinheit (18) durch Ausführen des ersten Satzes an Anweisungen erzeugtes erstes Steuersignal mit einem von der zweiten Verarbeitungseinheit (24) durch Ausführen des zweiten Satzes an Anweisungen erzeugten zweiten Steuersignal zu vergleichen, und bei Abweichungen zwischen dem ersten Steuersignal und dem zweiten Steuersignal ein Fehlersignal zu erzeugen;

**dadurch gekennzeichnet, dass**

ein Eingang (42) der zweiten Verarbeitungseinheit (24) an dem Ausgang (38) der ersten Verarbeitungseinheit (18) angeschlossen ist und die erste Verarbeitungseinheit (18) und die zweite Verarbeitungseinheit (24) dazu eingerichtet sind, den ausgegebenen Eingabezustand nach einer vorbestimmten nominellen Zeitdauer, $t_{nom}$, nach dem Signal der dritten Taktquelle (16) zu bestimmen und, wenn dem bestimmten Eingabezustand ein Ausführen der Anweisungen zugeordnet ist, die Anweisungen auszuführen.

2. Schaltung (10) nach Anspruch 1, wobei ein Eingang (40) der ersten Verarbeitungseinheit (18) an den Ausgang (38) der ersten Verarbeitungseinheit (18) angeschlossen ist.

3. Schaltung (10) nach Anspruch 1 oder 2, wobei das Bestimmen des ausgegebenen Eingabezustand durch die erste Verarbeitungseinheit (18) durch die erste Taktquelle (12) taktbar ist und das Bestimmen des ausgegebenen Eingabezustand durch die zweite Verarbeitungseinheit (24) durch die zweite Taktquelle (14) taktbar ist.

4. Schaltung (10) nach Anspruch 3, wobei die erste Taktquelle (12) und die zweite Taktquelle (14) eine identische nominelle Frequenz, $f_{nom}$, aufweisen und die nominelle Zeitdauer, $t_{nom}$, unter Berücksichtigung einer maximalen Frequenzabweichung der ersten Taktquelle (12) von der nominellen Frequenz und unter Berücksichtigung einer maximalen Frequenzabweichung der zweiten Taktquelle (14) von der nominellen Frequenz, so gewählt ist, dass eine minimale reale Zeitdauer zwischen der Ausgabe des Eingabezustands durch die erste Verarbeitungseinheit (18) und dem Bestimmen des Eingabezustands durch die Verarbeitungseinheiten (18, 24) größer als null ist.

5. Schaltung (10) nach einem der Ansprüche 1 bis 4, wobei die zweite Verarbeitungseinheit (24) dazu eingerichtet ist, in Reaktion auf ein Signal der dritten Taktquelle (16) einen Eingabezustand abzufragen und den abgefragten Eingabezustand an einem Ausgang der zweiten Verarbeitungseinheit (24) auszugeben

6. Schaltung (10) nach einem der Ansprüche 1 bis 5, wobei die erste Logikschaltung (20) der ersten Verarbeitungseinheit (18) und die zweite Logikschaltung (26) der zweiten Verarbeitungseinheit (24) funktional identisch ausgebildet sind.

7. Schaltung (10) nach einem der Ansprüche 1 bis 6, wobei die erste Verarbeitungseinheit (18) in ein erstes Gehäuse integriert ist -und die zweite Verarbeitungseinheit (24) in ein zweites Gehäuse integriert ist und die Schaltung (10) ein drittes Gehäuse aufweist, wobei das erste Gehäuse und das zweite Gehäuse in das dritte Gehäuse integriert sind.

8. Schaltung (10) nach Anspruch 7, wobei die erste Taktquelle (12) in das erste Gehäuse, die zweite Taktquelle (14) in das zweite Gehäuse und die dritte Taktquelle in das dritte Gehäuse integriert ist.

9. Schaltung (10) nach einem der Ansprüche 1 bis 8, wobei die erste Verarbeitungseinheit (18) dazu eingerichtet ist, in Reaktion auf das Signal der dritten Taktquelle (16) durch Ausführen des ersten Satzes an Anweisungen den Eingabezustand der Eingabeeinheit (30) zu bestimmen.

10. Schaltung (10) nach einem der Ansprüche 1 bis 9, wobei die Schaltung (10) dazu eingerichtet ist, in jeder Periode der dritten Taktquelle (16) das erste Steuerprogramm und das zweite Steuerprogramm korreliert auszuführen.

**Claims**

1. Circuit (10) comprising:

a first clock source (12), a second clock source (14) and a third clock source (16),
a first processing unit (18) which is connected to the first clock source (12) and has a first logic circuit (20) and a first storage circuit (22) connected to the first logic circuit (20), wherein the first storage circuit (22) stores a first set of instructions which is configured to implement a first control program when executed by the first logic circuit (20), wherein the first clock source (12) is configured to predefine a clock rate of the execution of the first set of instructions,

a second processing unit (24) which is connected to the second clock source (14) and has a second logic circuit (26) and a second storage circuit (28) connected to the second logic circuit (26), wherein the second storage circuit (28) stores a second set of instructions which is configured to implement a second control program when executed by the second logic circuit (26), wherein the second clock source (14) is configured to predefine a clock rate of the execution of the second set of instructions, and the second set of instructions is a functionally identical copy of the first set of instructions, and

an input unit (30), wherein the first processing unit (18) is configured to query an input state of the input unit (30) in response to a signal from the third clock source (16) and to output the queried input state at an output (38) of the first processing unit (18),

wherein the circuit (10) is also configured to compare a first control signal generated by the first processing unit (18) by executing the first set of instructions with a second control signal generated by the second processing unit (24) by executing the second set of instructions and to generate an error signal in the event of discrepancies between the first control signal and the second control signal;

**characterized in that**

an input (42) of the second processing unit (24) is connected to the output (38) of the first processing unit (18), and the first processing unit (18) and the second processing unit (24) are configured to determine the input state which has been output after a predefined nominal period, $I_{nom}$, after the signal from the third clock source (16) and to execute the instructions if execution of the instructions is assigned to the determined input state.

2. Circuit (10) according to Claim 1, wherein an input (40) of the first processing unit (18) is connected to the output (38) of the first processing unit (18).

3. Circuit (10) according to Claim 1 or 2, wherein the determination of the input state which has been output can be clocked by the first processing unit (18) by means of the first clock source (12), and the determination of the input state which has been output can be clocked by the second processing unit (24) by means of the second clock source (14).

4. Circuit (10) according to Claim 3, wherein the first clock source (12) and the second clock source (14) have an identical nominal frequency, $f_{nom}$, and the nominal period, $I_{nom}$, is selected, taking into account a maximum frequency deviation of the first clock source (12) from the nominal frequency and taking into account a maximum frequency deviation of the second clock source (14) from the nominal frequency, in such a manner that a minimum real period between the output of the input state by the first processing unit (18) and the determination of the input state by the processing units (18, 24) is greater than zero.

5. Circuit (10) according to one of Claims 1 to 4, wherein the second processing unit (24) is configured to query an input state in response to a signal from the third clock source (16) and to output the queried input state at an output of the second processing unit (24).

6. Circuit (10) according to one of Claims 1 to 5, wherein the first logic circuit (20) of the first processing unit (18) and the second logic circuit (26) of the second processing unit (24) are functionally identical.

7. Circuit (10) according to one of Claims 1 to 6, wherein the first processing unit (18) is integrated in a first housing and the second processing unit (24) is integrated in a second housing, and the circuit (10) has a third housing, wherein the first housing and the second housing are integrated in the third housing.

8. Circuit (10) according to Claim 7, wherein the first clock source (12) is integrated in the first housing, the second clock source (14) is integrated in the second housing and the third clock source is integrated in the third housing.

9. Circuit (10) according to one of Claims 1 to 8, wherein the first processing unit (18) is configured to determine the input state of the input unit (30) in response to the signal from the third clock source (16) by executing the first set of instructions.

10. Circuit (10) according to one of Claims 1 to 9, wherein the circuit (10) is configured to execute the first control program and the second control program in a correlated manner in each period of the third clock source (16).

**Revendications**

1. Circuit (10), comprenant :

une première source d'horloge (12), une deuxième source d'horloge (14) et une troisième source d'horloge (16),

une première unité de traitement (18) reliée à la première source d'horloge (12) et présentant un premier circuit logique (20) et un premier circuit de mémoire (22) relié au premier circuit logique (20), dans lequel un premier jeu d'instructions est enregistré dans le premier circuit de mémoire (22) et est conçu pour mettre en œuvre un premier programme de commande lorsqu'il est exécuté par le premier circuit logique (20), la première source d'horloge (12) étant conçue pour spécifier une cadence de l'exécution du premier jeu d'instructions,

une deuxième unité de traitement (24) reliée à la deuxième source d'horloge (14) et présentant un deuxième circuit logique (26) et un deuxième circuit de mémoire (28) relié au deuxième circuit logique (26), dans lequel un deuxième jeu d'instructions est enregistré dans le deuxième circuit de mémoire (28) qui est conçu pour mettre en œuvre un deuxième programme de commande lorsqu'il est exécuté par le deuxième circuit logique (26), la deuxième source d'horloge (14) étant conçue pour spécifier une cadence de l'exécution du deuxième jeu d'instructions, et le deuxième jeu d'instructions est une copie fonctionnellement identique au premier jeu d'instructions, et

une unité d'entrée (30), la première unité de traitement (18) étant conçue pour interroger un état d'entrée de l'unité d'entrée (30) en réaction à un signal de la troisième source d'horloge (16), et pour sortir l'état d'entrée interrogé à une sortie (38) de la première unité de traitement (18),

dans lequel le circuit (10) est en outre conçu pour comparer un premier signal de commande produit par la première unité de traitement (18) par l'exécution du premier jeu d'instructions à un deuxième signal de commande produit par la deuxième unité de traitement (24) par l'exécution du deuxième jeu d'instructions, et pour produire un signal d'erreur en cas d'écarts entre le premier signal de commande et le deuxième signal de commande ;

**caractérisé en ce qu'**une entrée (42) de la deuxième unité de traitement (24) est reliée à la sortie (38) de la première unité de traitement (18) et la première unité de traitement (18) et la deuxième unité de traitement (24) sont conçues pour déterminer l'état d'entrée sorti après une durée nominale prédéterminée, $I_{nom}$, après le signal de la troisième source d'horloge (16), et pour exécuter les instructions si une exécution des instructions est associée à l'état d'entrée déterminé.

2. Circuit (10) selon la revendication 1, dans lequel une entrée (40) de la première unité de traitement (18) est reliée à la sortie (38) de la première unité de traitement (18).

3. Circuit (10) selon la revendication 1 ou 2, dans lequel la détermination de l'état d'entrée sorti peut être cadencée par la première unité de traitement (18) par la première source d'horloge (12) et la détermination de l'état d'entrée sorti peut être cadencée par la deuxième unité de traitement (24) par la deuxième source d'horloge (14).

4. Circuit (10) selon la revendication 3, dans lequel la première source d'horloge (12) et la deuxième source d'horloge (14) présentent une fréquence nominale, $f_{nom}$, identique, et la durée nominale, $I_{nom}$, est choisie en tenant compte d'un écart de fréquence maximal de la première source d'horloge (12) par rapport à la fréquence nominale et en tenant compte d'un écart de fréquence maximal de la deuxième source d'horloge (14) par rapport à la fréquence nominale, de telle sorte qu'une durée réelle minimale entre la sortie de l'état d'entrée par la première unité de traitement (18) et la détermination de l'état d'entrée par les unités de traitement (18, 24) est supérieure à zéro.

5. Circuit (10) selon l'une quelconque des revendications 1 à 4, dans lequel la deuxième unité de traitement (24) est conçue, en réaction à un signal de la troisième source d'horloge (16), pour interroger un état d'entrée et pour sortir l'état d'entrée interrogé à une sortie de la deuxième unité de traitement (24).

6. Circuit (10) selon l'une quelconque des revendications 1 à 5, dans lequel le premier circuit logique (20) de la première unité de traitement (18) et le deuxième circuit logique (26) de la deuxième unité de traitement (24) sont réalisés de manière fonctionnellement identique.

7. Circuit (10) selon l'une quelconque des revendications 1 à 6, dans lequel la première unité de traitement (18) est intégrée dans un premier boîtier et la deuxième unité de traitement (24) est intégrée dans un deuxième boîtier et le circuit (10) présente un troisième boîtier, le premier boîtier et le deuxième boîtier étant intégrés dans le troisième boîtier.

8. Circuit (10) selon la revendication 7, dans lequel la première source d'horloge (12) est intégrée dans le premier boîtier, la deuxième source d'horloge (14) est intégrée dans le deuxième boîtier, et la troisième source d'horloge est intégrée dans le troisième boîtier.

9. Circuit (10) selon l'une quelconque des revendications 1 à 8, dans lequel la première unité de traitement (18) est conçue, en réaction au signal de la troisième source d'horloge (16), pour déterminer l'état d'entrée de l'unité d'entrée (30) par l'exécution du premier jeu d'instructions.

10. Circuit (10) selon l'une quelconque des revendications 1 à 9, dans lequel le circuit (10) est conçu pour exécuter de façon corrélée le premier programme de commande et le deuxième programme de commande à chaque période de la troisième source d'horloge (16).

**Fig. 1**

| | |
|---|---|
| 44 | IN REAKTION AUF EIN SIGNAL EINER DRITTEN TAKTQUELLE, ABFRAGEN EINES EINGABEZUSTANDS DER EINGABEEINHEIT UND AUSGEBEN DES ABGEFRAGTEN EINGABEZUSTANDS AN EINEM AUSGANG DER ERSTEN VERARBEITUNGSEINHEIT |

| | |
|---|---|
| 46 | BESTIMMEN, DURCH DIE ERSTE VERARBEITUNGSEINHEIT UND DIE ZWEITE VERARBEITUNGSEINHEIT, DES AUSGEGEBENEN EINGABEZUSTANDS NACH EINER VORBESTIMMTEN NOMINELLEN ZEITDAUER NACH DEM SIGNAL·DER DRITTEN TAKTQUELLE UND, WENN DEM BESTIMMTEN EINGABEZUSTAND EIN AUSFÜHREN VON ANWEISUNGEN ZUGEORDNET IST, AUSFÜHREN DER ANWEISUNGEN |

| | |
|---|---|
| 48 | VERGLEICHEN EINES VON DER ERSTEN VERARBEITUNGSEINHEIT DURCH AUSFÜHREN DES ERSTEN SATZES AN ANWEISUNGEN ERZEUGTEN ERSTEN STEUERSIGNALS UND EINES VON DER ZWEITEN VERARBEITUNGSEINHEIT DURCH AUSFÜHREN DES ZWEITEN SATZES AN ANWEISUNGEN ERZEUGTEN ZWEITEN STEUERSIGNALS |

**Fig. 2**

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0316087 A2
- EP 3048499 A1